# NEW EUROPEAN PATENT SPECIFICATION

(11) **EP 3 122 568 B2**
(45) Date of publication and mention of the opposition decision: **25.06.2025**
(45) Mention of the grant of the patent: 06.05.2020
(21) Application number: 15714261.3
(22) Date of filing: 26.03.2015
(51) Int. Cl.: B42D 25/24, B42D 25/333, B42D 25/45, B42D 1/00, B42D 3/06

(54) **SECURITY BOOKLET**
SICHERHEITSBROSCHÜRE
LIVRET DE SÉCURITÉ

(30) Priority: 27.03.2014 GB 201405510
(43) Date of publication of application: 01.02.2017
(73) Proprietor: HID CID LIMITED, Basingstoke RG24 8YB (GB)
(72) Inventor: SUGDON, Matthew Charles, Basingstoke Hampshire RG24 9RU (GB); PRACHAR, Michael, Chandler's Ford Hampshire SO53 4LN (GB); WATSON, Michael Steven, Basingstoke Hampshire RG25 3JQ (GB)
(74) Representative: Kramer Barske Schmidtchen Patentanwälte PartG mbB
(86) International application number: PCT/GB2015/050904
(87) International publication number: WO 2015/145158

(56) References cited:
- EP-A1- 1 008 459
- EP-A1- 2 433 810
- EP-B1- 1 718 476
- WO-A1-2007/034129
- WO-A1-2007/115908
- WO-A1-2008/039437
- WO-A1-2011/151638
- WO-A2-2006/092254
- DE-A1- 102005 020 198
- DE-A1- 102006 011 388
- FR-A1- 2 863 083
- US-A1- 2008 284 155
- US-A1- 2012 104 102
- US-B2- 7 872 579

## Description

The invention relates to a security booklet, for example for use as a passport or other identifying document. Other examples include cheque books, bank books and ticket books in which multiple pages are joined to one another to be foldable about an axis.

Conventional security booklets such as passports comprise a cover foldable about an axis; a set of page sheets , referred to in bookbinding as a book block, stitched together along the axis about which they can be folded to define a set of pages. The book block and the cover are joined by an adhesive bond between the end papers of the book block and the cover and wherein one of the pages is provided with personalised data relating to the holder of the security booklet.

Although there have been some proposals to manufacture electronic passports using polycarbonate sheets, such as described in EP-A-2433810, the vast majority of security booklets continue to be made using fibrous material such as paper in view of the convenience of working with this material. An example can be found in GB-A-2315706.

These known paper based security booklets are difficult to tamper with because of the way in which the page sheets are stitched together and secured to the cover. Furthermore, the personalised data page carries biometric information and the like which may be encrypted. Nevertheless, a determined fraudster may be able to tamper with a genuine passport to remove the stitched set of pages, replace the personalised data page and then adhere the new set of pages back into the old cover in a way which is not easily detectable to the untrained eye.

One approach to reducing this risk is described in WO-A-2011/151638 which involves using a specialised form of stitching which is very difficult to tamper with. However, there is a continuing need to improve security of such booklets.

Further examples of booklets, some of which are adapted as security booklets, can be found in US-A-2012/104102, WO-A-2006/092254, WO-A-2007/115908 and WO-A-2008/039437.

In accordance with the present invention, a security booklet is defined in claim 1.

In this way at least one part of one of the page sheets may be adhered to the cover construction laterally offset from the axis, while at least a second part of the same page sheet on the opposite side of the stitch line can be folded freely about the common axis of the book block and cover assembly. In one embodiment of the invention, where another part of said one page sheet is provided with personalized data, the adhered portion of the page sheet corresponds to the page lying on the side of the stitching line opposite to that on which the personalisation data is provided.

In a second embodiment, the adhered portion lies at the distal area of a page sheet that has been folded an even number of times parallel to the common axis of the book block and cover assembly. In this way, the one page sheet is adhered to the cover while the other part of the page sheet can still be freely folded about the axis in a conventional manner. This enables the data or other (security) features, if any, on this other part of the page sheet to be viewed in transmission as well as reflection.

Any attempt to tamper with the booklet so as to remove and replace the part of the one page sheet not adhered to the cover would require that page to be physically cut from the remaining part of the page sheet adhered to the cover or to separate the adhered part of the page sheet from the rest of the cover. It would not be possible simply to remove all the stitched page sheets from the cover without damaging the adhered part. This is particularly beneficial where the non-adhered part is provided with personalization data.

In preferred constructions, the adhered part of the one page sheet is adhered as an end page to the cover. We have noted that typical security booklets include end pages which are adhered to the inner surface of the cover and are used to hide security elements such as antennas and the like, to provide a smooth facing surface, or to incorporate security features. However, we have realised that such end pages could be used to provide a significant improvement in the anti-tamper properties of such a booklet by adhering part of the page sheet defining the personalised data as an end page to the cover.

The another page could extend fully over the surface of the cover (and thus underneath the part of the one page sheet adhered to the cover) or alternatively said another page may be smaller than one of the page sheets but includes a tab section protruding through the second region and stitched to the other page sheets along the second region.

In more complex structures, said one page sheet includes a further page adhered to the cover, for example as a second end page, on the opposite side of the axis to the side to which said another part is adhered.

For example, said one page sheet may have a width corresponding to four or six pages, adjacent pages being folded about respected fold lines. In other words, the one page sheet is formed in a concertina fashion. This provides additional security since the page of the one page sheet which is not adhered to the cover is then integrally formed with both adhered parts.

A further advantage of the concertina form is that additional elements may be introduced between adjacent folded sections of the concertina such as seam reinforcing elements, electronic chips and antennae, and electromagnetic screening elements provided to prevent the unauthorised interrogation of personalised information held on a chip, for example, when the booklet is closed.

In particularly preferred examples, adjacent folded sections of the concertina provide a cooperating see-through feature. The see-through feature can be defined in a number of different ways. Firstly, a cooperating pair of watermarks could be provided, one in each section, so that they can be viewed in transmission to observe how they cooperate together in the manner of a see-through feature. In a second approach, a cooperating pair of printed designs could be provided, one on each section, and in a third alternative a watermark could be provided in one section and a cooperating printed design on the other section.

The one part of the one page sheet could be adhered to the cover at selected points or in patterns but preferably is adhered over its full area to the cover. This maximises the difficulty of detaching the one page sheet from the cover.

In addition, preferably the set of page sheets is adhered to the cover in the region of the stitching. This further increases the difficulty of tampering with the booklet.

As explained above, each page sheet is formed of a single fibrous sheet. By "single fibrous sheet" we mean a single fibrous sheet formed from cotton and/or cellulose and/or synthetic fibers, and preferably a sheet of paper obtained by wet processing and in particular on a cylinder mould paper machine or a Fourdrinier paper machine. This extends to the formation of such a sheet using two plies joined at the wet end of the paper machine while the fibres are still wet. Once manufactured, a single sheet will result, without any division in two plies.

Preferably the paper is made from natural cotton or cellulose fibres but combinations of natural and synthetic fibres are possible or the sole use of synthetic fibres. Examples of suitable synthetic fibres include those based on polyvinyl alcohol, polyamides, polyacrylics and polyesters.

Fibrous sheets such as paper sheets remain the preferred material over more recently developed plastics materials because of their inherent flexibility while also making it much easier to incorporate conventional security features such as watermarks (which can extend across the axis, or folds and the like), apertures, security threads exposed at windows (these can also extend across the axis or folds and the like) and the like. Furthermore when considering the use of a material to adhere to the cover fibrous materials such as paper provide improved anti-counterfeit resistance to plastics materials such as polycarbonate as when attempting to separate the material from the cover the fibrous material will typically split internally whereas the plastic material can be removed intact.

Typically, each page sheet has the same composition.

The thickness of said one page sheet, and preferably all the page sheets, is preferably substantially uniform. This again makes it much simpler to incorporate the sheets into a booklet and achieve the desired flexibility. It should be noted, however, that this uniformity may not be over the entire sheet if the sheet is provided with security features such as watermarks, apertures and windows which expose security threads which will cause local variations in the sheet thickness. Nevertheless, we envisage that at least 60 or 70% of the sheet will have the said uniform thickness.

Typical thicknesses will be less than 200µm, preferably less than 175µm, and most preferably in the range 100-150µm.

The cover may be made of conventional materials such as paper, card, plastics such as PVC, polyethylene, polycarbonate, PET, coated paper, woven fabric and non-woven synthetic material.

The cover has a single or multiple laminate structure and could include conventional end sheet(s) to which the personalized page sheet is adhered.

As well as or as an alternative to incorporating an electronic chip and antenna between folds of said one page sheet, the cover may include an electronic chip and antenna secured thereto. For example, the cover might include an inlay, such as Teslin, incorporating the electronic chip and antenna.

Personalized data can be provided on any of the page sheets but preferably said another part of said one page sheet is formed by a page provided with personalized data. This provides particular security for the personalized data since it is connected with the one part of the one page sheet which is adhered to the cover thus making it very difficult to detach (and replace) the personalized data.

In some cases, a transparent or translucent plastics protective membrane is laminated over the personalized data.

The protective plastics layer is relatively thin, preferably approximately 10µm thick, and substantially fully transparent or semi-transparent. The protective layer preferably comprises a coating of lacquer, a thin film or a polymeric laminate. The protective layer includes one or more security features, such as holograms, colour changing inks or other optically variable elements to make it more difficult to reproduce by a counterfeiter. The security features may be applied using a transfer layer such that they are located underneath the protective layer. Thus the protective layer can provide a security function to, as well as protecting against the wear of, the fibrous sheet. Typically the protective layer will be a polymeric laminate which is preferably a non-self-supporting structure applied by a transfer process, but may also be a polymeric, self-supporting structure, applied to the fibrous substrate layer using adhesive and/or heatsealing. The polymeric laminate may comprise one or more layers. If formed of a single layer then it may comprise, for example, polyethylene terephthalate (PET), polyvinyl chloride (PVC) or polypropylene (PP). If formed of more than one layer the polymeric laminate is preferably applied using a transfer process.

In alternative embodiments, the personalized data may be provided by a member adhered to said one of the page sheets.

The member may be made of plastics such as polycarbonate, polyester, PVC, PET, or polyethylene.

The pages of the booklet may be provided with one or more security features of a conventional form such as fine-line printing; intaglio printing; embossed metallic foils; optically variable elements, holograms, Kinegrams or angularly dependent colour shifting effects, watermarks and the like. In particularly preferred examples, the end pages formed by a part of the one page sheet may be provided with embedded security features such as watermarks or security threads.

The security features such as security printing, security threads or watermarks may be registered with individual pages or indeed between pages, that registration being observable when the pages are folded. This is particularly the case for the more complex concertinaed structures where the one page sheet may have a width corresponding to four or six pages, adjacent pages being folded about respected fold lines. In other words, the one page sheet is formed in a concertina fashion. This provides additional security particularly when the non-adhered page of the one page sheet is provided with personalized data since the page provided with personalised data is then integrally formed with both adhered parts. In this case the security features can continue across the folded region or be positioned either side of the folded region such that when viewed in transmitted light they cooperate to form an image.

In particularly preferred examples, said one page sheet is provided with security features, such as printing but can also be provided with watermarks, security threads etc. that extends over more than one page in a continuous pattern. This presents significant difficulties to a potential counterfeiter since any attempt to separate part of said one page sheet will be more easily detected due to breaks in the continuous security pattern.

In the case of applying surface security features to the said one page sheet such that they extend over the axis in a continuous manner it is particularly important to have a single sheet of uniform thickness in order to ensure adherence of the security feature. In this case the surface applied security feature could be a printing pattern or a foil stripe or patch applied using a conventional transfer process.

Some examples of security booklets, in particular passports, constructed in accordance with the invention will now be described with reference to the accompanying drawings, in which,-
Figure 1 is a schematic cross section, not to scale, through a first example of a passport construction;
Figure 2 is a view similar to that shown in Figure 1 but including an antenna and chip;
Figure 3 is of view similar to Figure 1 but utilising a concertina formed bio-data page;
Figure 4 is a view similar to Figure 3 but with the addition of an antenna and chip;
Figure 5 illustrates a further example of a passport similar to that shown in Figure 4 but with a double concertina page sheet;
Figure 6 illustrates a modified form of the Figure 4 example;
Figures 7A-7C illustrate individual components of a see-through feature and the result of combining the features respectively; and
Figures 8A-8C are similar to Figures 7A-7C but illustrating a second embodiment of a see-through feature.

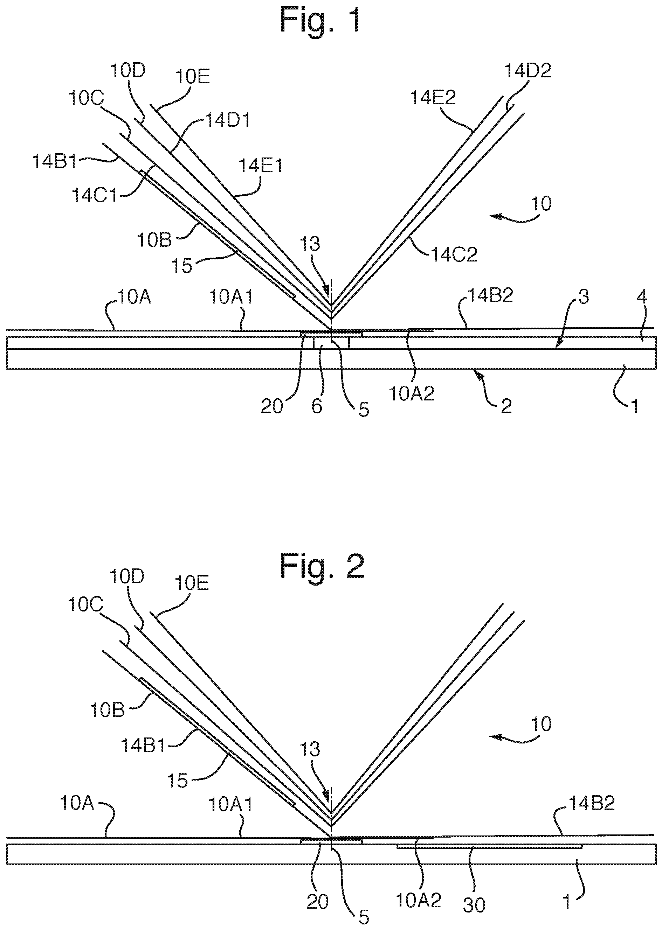

The example of the passport shown in Figure 1 comprises a durable paper cover 1 having outer and inner surfaces 2, 3. The outer surface 2 is decorated with indicia (not shown) relevant to the issuing authority in a conventional manner, while the surface 3 provides a layer onto which additional substrates or layers can be bonded. In this example, the surface 3 has a Teslin Inlay 4 bonded to it and this may optionally include an embedded antenna and chip (not shown). The cover 1 is foldable about an axis 5 and the Teslin Inlay layer 4 is provided with a gap 6 extending along the axis 5 to enable folding to take place. The gap 6 is not essential however.

Secured to the cover 1 on its inner side is a stitched set of page sheets 10, defining a book block, individual page sheets being indicated at 10A-10E respectively. The sheets 10A-10E are stitched together along the axis 5 using a thread 13 shown schematically in Figure 1. Each page sheet 10A-10E is formed as a single, fibrous sheet having a uniform thickness less than 200 microns and in a preferred example is paper. Typically, each page sheet 10A-10E has the same, uniform thickness.

The page sheets 10B-10E have a similar size such that when folded about the axis 5, they define respective pairs of pages 14B1, 14B2, 14C1, 14C2 etc., each having two sides. Each page sheet, when flat, extends substantially over most of the surface of the cover 1.

It will be noted, however, that the page sheet 10A is smaller than the page sheets 10B-10E and includes a first page 10A1 adhered to the cover 1 via the Teslin Inlay 4 to form an end page, and an integral, second tab section 10A2 which extends through the axis 5. A reinforcing spine tape 20, for example made of paper, woven synthetic or natural fabric together with a heat activated adhesive, extends along the axis 5 and is adhered on one side to the Teslin Inlay 4 and on the other to the underside of the tab section 10A2. This tape 20 could be omitted and the page sheets adhered directly to the cover.

The page 14B1 defined by the page sheet 10B ("personalized page sheet") is provided with personalised data or bio-data relating to the holder of the passport. This can be of any conventional form including a photo image of the holder, their signature, date of birth etc. The data may be provided directly on the sheet or alternatively, as shown, on the inner surface of a transparent or translucent member 15 laminated to the sheet. The bio-data may be in visually recognizable and/or coded form. The additional member 15 may be laminated to the sheet 14B1 prior to construction of the book block or, more typically, after the book block has been constructed and secured to the cover 1. In either case, one or more of the pages of the booklet may be provided with security printing or other security features as will be described in more detail below, typically before the personalized data is provided.

Typically, features on the page 14B1 can be viewed in transmission as well as reflection.

Page 14B2 of the sheet 10B is adhered over its entire surface as an end page onto the paper cover 1 via the Teslin Inlay 4. It also overlays the tab section 10A2 to which it is also adhered. In other examples, including those to be described below, the page 14B2 may be adhered only over a part of its surface. If an attempt is made to detach the stitched page sheets 10 from the cover 1, it will be found that this is not possible without damaging the page sheet 10B because part of the sheet 10B is adhered to the cover 1 as end page 14B2.

As mentioned above, one or more of the page sheets can be provided with conventional security features such as watermarks, apertures, security threads which may be exposed in windows, security printing, surface applied security stripes or patches and the like. In a particularly preferred approach, security features such as guilloche patterns are printed continuously across the entire page sheet. The advantage of this is that if an attempt is made to sever for example the page 14B1 from the page 14B2 and then replace it with a new page, the security printing is unlikely to match across the axis 5.

The reference to the uniform thickness of each page sheet needs to be understood in the context of the possible inclusion of watermarks and security windows which locally will cause a reduction in the page thickness. As mentioned above, however, the page thickness will typically be uniform through at least 60% or 70% of the area of the sheet.

Figure 2 illustrates a passport construction similar to that shown in Figure 1 except that the Teslin Inlay 4 has been omitted. In addition, an antenna and chip layer 30 has been inserted in the cover 1.

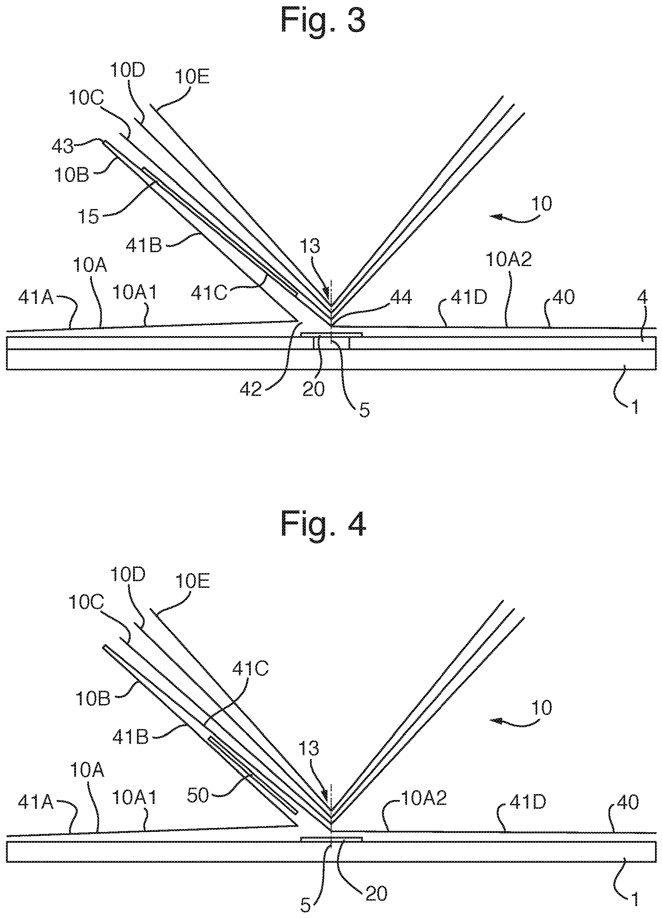

Figure 3 illustrates a further modified version of the Figure 1 example. In this case, the sheet 10B and sheet 10A have been replaced by a single, enlarged sheet 40 having a length dimension equivalent to four pages 41A-41D. Adjacent pages are folded at folds 42, 43, 44 while pages 41B, 41C will typically be laminated or otherwise adhered together.

The sheet 40 is stitched to the other page sheets 10C-10E by thread 13 while the pages 41A, 41D are adhered as end pages to the cover 1 via the Teslin Inlay 4.

The page 41C carries personalised data 15 equivalent to the page 14B1 in Figure 1.

The advantage of this structure is that the personalised data page 41C is integrally formed with both end pages 41A and 41D thus making the structure even more difficult to tamper with.

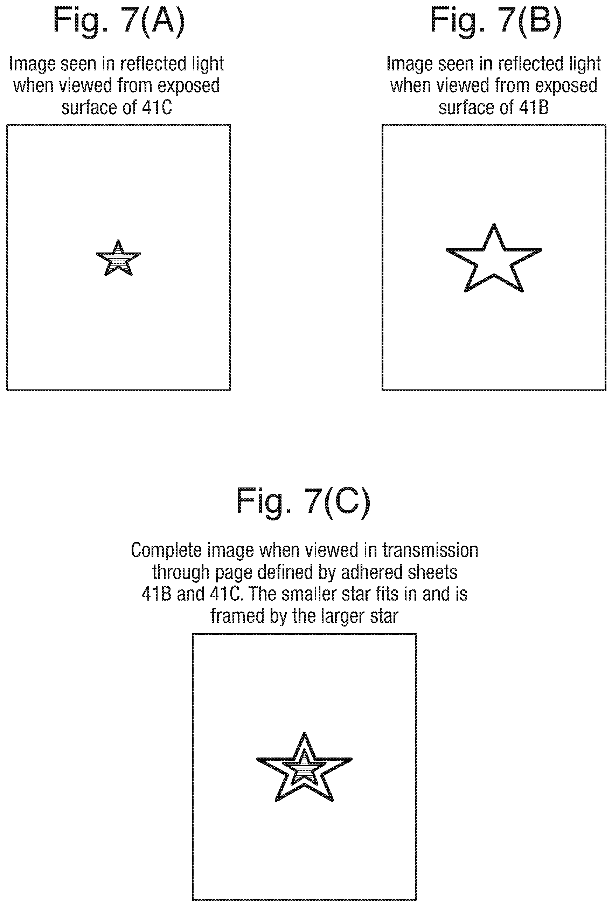

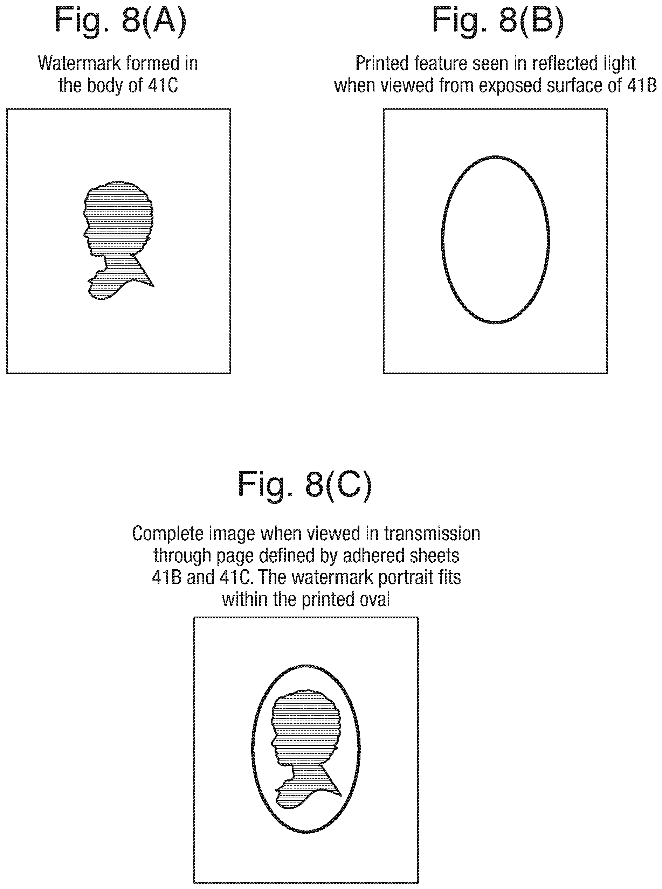

A further advantage is that pages 41B,41C can provide cooperating see-through security features. In this case a security feature (not shown) in or on page 41B and typically laterally offset from personalised data 15 is configured to visually co-operate with a security feature (not shown) in or on page 41C. That is, the security features are designed such that, when viewed together, they form a recognisable combination which is easily describable and therefore allows for straightforward checking of their relative position. For example, in one particularly preferred case, the security feature (Figure 7B) in 41B may be configured to frame (e.g. surround or encircle) the security feature (Figure 7A) in 41C, preferably by following the periphery of the security feature 41C (Figure 7C). In a further example, the security feature (Figure 8B) in 41B may be a printed feature configured to follow the outline of a circle or other shape and, upon viewing in transmitted light, a watermark (Figure 8A), present in page 41C may appear within the outline preferably centred on its centre point (Figure 8C). In this way, the two security features can be directly compared with one another in order to check that the required registration is present. In one embodiment the features in 41B and 41C are both watermarks and visible in transmitted light but in an alternative embodiment the security features can be printed on pages 41B and 41C respectively such that they are visible as separate security features when viewed in reflected light but combine to form a single recognisable image when viewed in transmitted light.

In other examples of visual co-operation, the security feature may be located such that when both are visible in transmitted light they together form a recognisable feature in combination. For example, in one preferred embodiment, the security feature in or on 41B is configured to represent a first, incomplete, portion of an indicia and the security feature in or on 41C is configured to represent a second portion of the same indicia such that when viewed in combination in transmission, the complete indicia is visible. For instance, a printed region on 41B could provide one half of a letter, number or symbol and a printed region on 41C could provide the other half.

In another example of visual co-operation the security feature on page 41B may be configured to overlap with the security feature in or on 41C when viewed in transmitted light. For example, the security feature on 41B could comprise a print which is configured to "colour in" a watermark in 41C. Any misalignment between the two will be apparent when the substrate is viewed in transmission.

In the Figure 3 example, an antenna and chip can be provided in the Teslin Inlay. Figure 4 illustrates a modified form of the Figure 3 example in which the Teslin Inlay 4 has been omitted and an antenna and chip provided between the folded pages 41B, 41C as shown at 50. The sheets 41B, 41C will be laminated together about the antenna and chip 50 prior to incorporation with the rest of the page sheets and assembly with the cover 1. In this example, the personalized data is provided directly on the page 41B or 41C and no additional protective laminate is used.

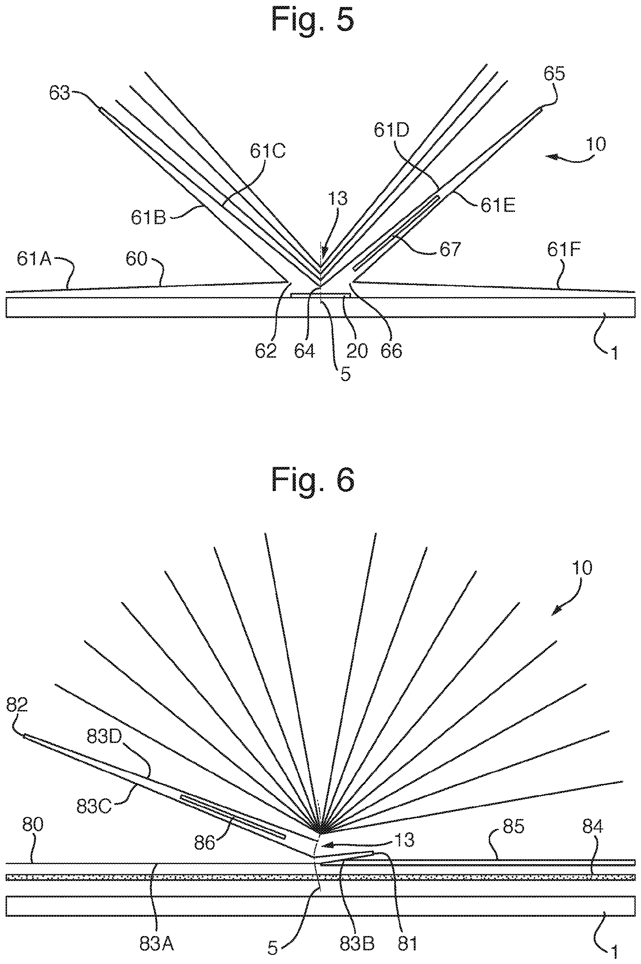

Figure 5 illustrates a further development of the Figure 4 structure. In this example, in place of the page sheet 40, a page sheet 60 is used having length equivalent to six pages 61A-61F with folds 62-66. These pages are integrally formed from the same sheet.

The page 61C is provided with personalised data while an antenna and chip combination 67 is secured between the pages 61D, 61E by laminating the pages together. In addition, the pages 61B, 61C are laminated together and then the sheet 60 is stitched to the remainder of the pages 10 by stitching thread 13. The pages 61A, 61F are then adhered directly to the cover 1 to form respective end pages. Of course, it would also be possible to include a Teslin Inlay layer 4 as in other examples and/or to provide one or more additional adhered layers between the cover 1 and pages 61A and 61F. Furthermore, it will be appreciated that the antenna and chip 67 could be positioned between the pages 61B, 61C and cooperating see-through security features could also be provided in the pages 61B,61C or 61D,61E.

Finally, Figure 6 illustrates a further example. In this case, a sheet 80 is provided having a length equivalent to about three pages folded at 81 and 82. The sheet defines an end page 83A adhered via adhesive 84 to the cover 1. A second, separate end page 85 is adhered to the remainder of the cover 1.

The page 83A extends beyond the hinge region 12 to form a tab 83B which is adhered to the end page 85, the tab being integrally formed with a page 83C which in turn is integrally formed via the hinge 82 with a page 83D. Pages 83C, 83D are laminated together with a chip and antenna 86 between them.

The sheet 80 is stitched to the remainder of the page sheets 10 via stitching 13.

## Claims

1. A security booklet comprising
i) a cover (1) foldable about an axis (5);
ii) a set of page sheets (10) stitched together along the axis about which they can be folded to define a set of pages (14B-14E), wherein
iii) one part (14B2) of one of the page sheets (10B) laterally offset from the axis (5) is adhered to the cover (1), while another part (14B1) of the said one page sheet can be folded separately from the cover and the other pages about the axis,
**characterised in that** each page sheet (10) is formed of a single fibrous sheet; and **in that** another page (10A1) of the set of pages is adhered to another part of the cover (1) laterally offset from the axis (5).

2. A booklet according to claim 1, wherein said one part (14B2) of said one page sheet is adhered as an end page to the cover.

3. A booklet according to claim 1 or claim 2, wherein said another page is smaller than the other page sheets but includes a tab section (10A2) extending through the axis (5) and stitched to the other page sheets along the axis.

4. A booklet according to claim 1, wherein said one page sheet (10B) includes a further part (41A) adhered to the cover (1) on the opposite side of the axis (5) to the side to which said one part (41D) is adhered, wherein said further part preferably comprises a second end page.

5. A booklet according to claim 4, wherein said one page sheet (10B) is formed in a concertina fashion, wherein said one page sheet preferably has a width equivalent to four or six pages, adjacent pages being folded about respective fold lines.

6. A booklet according to claim 5, further comprising an electronic chip and antenna combination (50) and/or electromagnetic screening elements provided between adjacent folded sections of the concertina.

7. A booklet according to claim 5 or claim 6, wherein adjacent folded sections of the concertina provide a cooperating see-through feature, and
wherein preferably the see-through feature is defined by a cooperating pair of watermarks, one in each section, a cooperating pair of printed designs, one on each section, or a watermark in one section and a cooperating printed design in the other section.

8. A booklet according to any of the preceding claims, wherein said another part (14B1) of said one page sheet is formed by a page provided with personalized data.

9. A booklet according to claim 8, further comprising a transparent or translucent plastics protective member laminated over the personalized data.

10. A booklet according to claim 8, wherein the personalised data is provided by a member adhered to said one of the page sheets, and wherein the member is preferably made of plastics, such as polycarbonate, polyester, PVC, PET or polyethylene.

11. A booklet according to any of the preceding claims, wherein the or each page adhered to the cover (1) is adhered over its full area.

12. A booklet according to any of the preceding claims, wherein the set of page sheets (10) is also adhered to the cover (1) in the region of the stitching.

13. A booklet according to any of the preceding claims, wherein each single fibrous sheet is formed from cotton and/or cellulose and/or synthetic fibres.

14. A booklet according to any of the preceding claims, wherein the thickness of said one page sheet (10B), and preferably all the page sheets, is substantially uniform, and wherein said uniform thickness is preferably less than 200µm, more preferably less than 175µm, and most preferably in the range 100-150µm.

15. A booklet according to any of the preceding claims, wherein the cover (1) includes an end paper to which the set of page sheets (10) is attached.

16. A booklet according to any of the preceding claims, wherein one or more of the pages includes one or more security features such as, fine-line printing; intaglio printing; embossed metallic foils; optically variable elements, holograms, Kinegrams or angularly dependent colour shifting effects, and watermarks.

17. A booklet according to claim 16, wherein the security features are registered with individual pages.

18. A booklet according to claim 16, wherein said one page sheet (10B) is provided with security features, such as printing, that extends over more than one page in a continuous pattern.

19. A security booklet according to any of the preceding claims, formed as a passport.

## Patentansprüche

1. Sicherheitsbuch mit
i) einem Einband (1), der um eine Achse (5) faltbar ist;
ii) einem Satz von Seitenblättern (10), die entlang der Achse, um die sie gefaltet werden können, zusammengeheftet sind, um einen Seitensatz (14B-14E) zu definieren, wobei
iii) ein seitlich der Achse (5) versetzt liegendes Teilstück (14B2) eines der Seitenblätter (10B) an den Einband (1) geklebt ist, während ein anderes Teilstück (14B1) von diesem einen Seitenblatt separat von dem Einband und den anderen Seiten um die Achse gefaltet werden kann,
**dadurch gekennzeichnet, dass** jedes Seitenblatt (10) aus einem einzigen faserigen Blatt gebildet ist und eine andere Seite (10A1) des Seitensatzes an ein anderes seitlich der Achse (5) liegendes Teilstück des Einbands (1) geklebt ist.

2. Sicherheitsbuch nach Anspruch 1, bei dem das eine Teilstück (14B2) von dem einen Seitenblatt als Vorsatz an den Einband geklebt ist.

3. Sicherheitsbuch nach Anspruch 1 oder Anspruch 2, bei dem die besagte andere Seite kleiner ist als die anderen Seitenblätter, aber einen Streifenabschnitt (10A2) aufweist, der sich durch die Achse (5) erstreckt und entlang der Achse an die anderen Seitenblätter geheftet ist.

4. Sicherheitsbuch nach Anspruch 1, bei dem das besagte eine Seitenblatt (10B) ein weiteres Teilstück (41A) aufweist, das auf der gegenüberliegenden Seite der Achse (5) von der Seite, an die das besagte eine Teilstück (41C) angeklebt ist, an den Einband (1) geklebt ist, wobei das besagte weitere Teilstück vorzugsweise ein zweites Vorsatz umfasst.

5. Sicherheitsbuch nach Anspruch 4, bei dem das besagte eine Seitenblatt (10B) in Art einer Ziehharmonika geformt ist, wobei das besagte eine Seitenblatt vorzugsweise eine Breite äquivalent zu vier oder sechs Seiten hat, wobei benachbarte Seiten um jeweilige Faltlinien gefaltet sind.

6. Sicherheitsbuch nach Anspruch 5, ferner umfassend eine Kombination (50) von elektronischem Chip und Antenne und/oder elektromagnetische Abschirmelemente, die zwischen benachbarten gefalteten Ziehharmonikaabschnitten vorgesehen sind.

7. Sicherheitsbuch nach Anspruch 5 oder Anspruch 6, bei dem benachbarte gefaltete Ziehharmonikaabschnitte zusammen ein Durchsicht-Merkmal schaffen und
bei dem vorzugsweise das Durchsicht-Merkmal durch ein zusammenwirkendes Wasserzeichenpaar, eines in jedem Abschnitt, ein zusammenwirkendes Paar von gedruckten Mustern, eines auf jedem Abschnitt, oder ein Wasserzeichen in einem Abschnitt und ein zusammenwirkendes gedrucktes Muster in dem anderen Abschnitt bestimmt ist.

8. Sicherheitsbuch nach einem der vorhergehenden Ansprüche, bei dem das besagte andere Teilstück (14B1) von dem besagten einen Seitenblatt durch eine Seite gebildet ist, die personalisierte Daten enthält.

9. Sicherheitsmerkmal nach Anspruch 8, ferner mit einem transparenten oder lichtdurchlässigen Kunststoffschutz, der über die personalisierten Daten laminiert ist.

10. Sicherheitsbuch nach Anspruch 8, bei dem die personalisierten Daten durch ein Element, das an das besagte eine Seitenblatt geklebt ist, bereitgestellt werden und das Element vorzugsweise aus Kunststoff hergestellt ist, wie zum Beispiel Polycarbonat, Polyester, PVC, PET oder Polyethylen.

11. Sicherheitsbuch nach einem der vorhergehenden Ansprüche, bei dem die eine oder jede Seite, die an die Abdeckung (1) geklebt ist, über ihre gesamte Fläche angeklebt ist.

12. Sicherheitsbuch nach einem der vorhergehenden Ansprüche, wobei der Satz von Seitenblättern (10) auch im Bereich der Naht an die Abdeckung (1) angeklebt ist.

13. Sicherheitsbuch nach einem der vorhergehenden Ansprüche, bei dem jedes einzelne faserige Blatt aus Baumwolle und/oder Zellulose und/oder synthetischen Fasern gebildet ist.

14. Sicherheitsbuch nach einem der vorhergehenden Ansprüche, bei dem die Dicke des besagten einen Seitenblatts (10B) und vorzugsweise aller Seitenblätter im Wesentlichen konstant ist und die konstante Dicke vorzugsweise weniger als 200 µm, insbesondere vorzugsweise weniger als 175 µm beträgt und am bevorzugtesten im Bereich 100-150 µm liegt.

15. Sicherheitsbuch nach einem der vorhergehenden Ansprüche, bei dem der Einband (1) ein Vorsatzblatt aufweist, an das der Satz von Seitenblättern (10) angebracht ist.

16. Sicherheitsbuch nach einem der vorhergehenden Ansprüche, bei dem eine oder mehrere der Seiten ein oder mehrere Sicherheitsmerkmale aufweisen, wie zum Beispiel Fine-Line-Printing, Tiefdruck, geprägte metallische Folien, sich optisch verändernde Elemente, Hologramme, Kinegramme oder winkelabhängig farbverschiebende Effekte und Wasserzeichen.

17. Sicherheitsbuch nach Anspruch 16, bei dem die Sicherheitsmerkmale auf einzelnen Seiten eingetragen sind.

18. Sicherheitsbuch nach Anspruch 16, bei dem das besagte eine Seitenblatt (10B) mit Sicherheitsmerkmalen versehen ist, wie zum Beispiel etwas gedrucktem, das sich in einem fortlaufenden Muster über mehr als eine Seite erstreckt.

19. Sicherheitsbuch nach einem der vorhergehenden Ansprüche, das als Reisepass ausgebildet ist.

## Revendications

1. Livret de sécurité comprenant
i) une couverture (1) pliable autour d'un axe (5) ;
ii) un ensemble de feuilles de page (10) cousues ensemble le long de l'axe autour duquel elles peuvent être pliées pour définir un ensemble de pages (14B-14E), où
iii) une partie (14B2) d'une des feuilles de page (10B) latéralement décalée par rapport à l'axe (5) est collée sur la couverture (1), tandis qu'une autre partie (14B1) de ladite une feuille de page peut être pliée séparément de la couverture et des autres pages autour de l'axe,
**caractérisé en ce que** chaque feuille de page (10) est formée d'une seule feuille fibreuse ; et **en ce qu'**une autre page (10A1) de l'ensemble des pages est collée sur une autre partie de la couverture (1) latéralement décalée par rapport à l'axe (5).

2. Livret selon la revendication 1, dans lequel ladite une partie (14B2) de ladite une feuille de page est collée en tant qu'une page de fin à la couverture.

3. Livret selon la revendication 1 ou la revendication 2, dans lequel ladite autre page est plus petite que les autres feuilles de page mais comprend une section d'onglet (10A2) s'étendant à travers l'axe (5) et cousue aux autres feuilles de page le long de l'axe.

4. Livret selon la revendication 1, dans lequel ladite une feuille de page (10B) comprend une autre partie (41A) collée à la couverture (1) sur le côté opposé de l'axe (5) au côté auquel ladite une partie (41D) est collée, dans lequel ladite autre partie comprend de préférence une deuxième page d'extrémité.

5. Livret selon la revendication 4, dans lequel ladite une feuille de page (10B) est formée en accordéon, dans lequel ladite une feuille de page a de préférence une largeur équivalente à quatre ou six pages, les pages adjacentes étant pliées autour de lignes de pliage respectives.

6. Livret selon la revendication 5, comprenant en outre une combinaison de puce électronique et d'antenne (50) et/ou des éléments de blindage électromagnétique prévus entre des sections pliées adjacentes de l'accordéon.

7. Livret selon la revendication 5 ou la revendication 6, dans lequel des sections pliées adjacentes de l'accordéon fournissent une caractéristique transparente coopérante, et dans lequel, de préférence, la caractéristique de transparence est définie par une paire de filigranes coopérants, un dans chaque section, une paire de dessins imprimés coopérants, un sur chaque section, ou un filigrane dans une section et un dessin imprimé coopérant dans l'autre section.

8. Livret selon l'une quelconque des revendications précédentes, dans lequel ladite autre partie (14B1) de ladite une feuille de page est formée par une page pourvue de données personnalisées.

9. Livret selon la revendication 8, comprenant en outre un élément de protection en plastique transparent ou translucide laminé sur les données personnalisées.

10. Livret selon la revendication 8, dans lequel les données personnalisées sont fournies par un élément collé sur ladite une des feuilles de page, et dans lequel l'élément est de préférence en plastique, tel que le polycarbonate, le polyester, le PVC, le PET ou le polyéthylène.

11. Livret selon l'une quelconque des revendications précédentes, dans lequel ladite ou chaque page collée à la couverture (1) est collée sur toute sa surface.

12. Livret selon l'une quelconque des revendications précédentes, dans lequel l'ensemble de feuilles de page (10) est également collé à la couverture (1) dans la zone de la couture.

13. Livret selon l'une quelconque des revendications précédentes, dans lequel chaque feuille fibreuse est formée de coton et/ou de cellulose et/ou de fibres synthétiques.

14. Livret selon l'une quelconque des revendications précédentes, dans lequel l'épaisseur de ladite une feuille de page (10B), et de préférence de toutes les feuilles de page, est sensiblement uniforme, et dans lequel ladite épaisseur uniforme est de préférence inférieure à 200 µm, plus préférablement inférieure à 175 µm, et plus préférablement dans la plage de 100 - 150 µm.

15. Livret selon l'une quelconque des revendications précédentes, dans lequel la couverture (1) comprend un papier de garde auquel est attaché l'ensemble de feuilles de page (10).

16. Livret selon l'une quelconque des revendications précédentes, dans lequel une ou plusieurs des pages comprennent un ou plusieurs éléments de sécurité tels que l'impression en ligne fine, l'impression en creux, des feuilles métalliques en relief, des éléments optiquement variables, des hologrammes, des kinégrammes ou des effets de changement de couleur dépendant de l'angle, et des filigranes.

17. Livret selon la revendication 16, dans lequel les éléments de sécurité sont enregistrés sur des pages individuelles.

18. Livret selon la revendication 16, dans lequel ladite une feuille de page (10B) est pourvue d'éléments de sécurité, tels que l'impression, qui s'étendent sur plus d'une page dans un motif continu.

19. Livret de sécurité selon l'une quelconque des revendications précédentes, formé comme un passeport.
